# EUROPEAN PATENT APPLICATION

(11) **EP 4 501 094 A1**
(43) Date of publication of application: **05.02.2025**
(21) Application number: 24187948.5
(22) Date of filing: 11.07.2024
(51) Int. Cl.: A01C 7/10, A01C 21/00, A01C 5/06

(54) **METHOD OF OPERATING AN AGRICULTURAL WORK MACHINE**

(30) Priority: 31.07.2023 US 202363529853 P; 11.12.2023 US 202318535673; 18.01.2024 US 202418416551
(71) Applicant: Deere & Company, Moline, IL 61265 (US)
(72) Inventor: Casper, Robert T., Mannheim (DE); Wonderlich, Grant J., Mannheim (DE); Hubner, Cary S., Mannheim (DE)
(74) Representative: Reichert, Christian

(57) **Abstract**

A method of operating an agricultural work machine (140) is disclosed. The method comprising: emitting (352) a patterned light from a visualization system (60) mounted on a planter row unit (14) onto a trench in a ground surface (G), wherein the visualization system (60) includes a structured light unit (64) mounted on the planter row unit (14); depositing a commodity in the trench by the planter row unit (14); capturing (354) a two-dimensional image of the projected patterned light on the trench with the visualization system (60) that includes a camera (62) mounted on the planter row unit (14), wherein the two-dimensional image includes the commodity (102); and determining (358), with a controller (80) operably connected to the camera (62), an error placement (210, 212) of the commodity (102) in the two-dimensional image relative to a boundary (200).

## Description

### FIELD OF THE DISCLOSURE

The present disclosure relates to a method of operating an agricultural work machine, and in particular to a method using a visualization system for a work machine, comprising adjustment of a mechanical delay offset factor for improved planter section control using image processing by the visualization system for a planter row unit.

### BACKGROUND OF THE DISCLOSURE

A headland or turnrow is the area at each end of a planted field and is one type of a boundary. Planters often create rows in the headland area wherein these rows run perpendicular to the lay of the field. Other types of boundaries include waterways and previously planted areas of a field.

Planter section control turns implement sections on and off wherein the implement sections are assembled with a work machine such as a planter. By reducing product application overlap, section control decreases the total amount of product used in the field, which can lead to lower costs. Additionally, an increase in yields can be seen as there is less competition amongst plants who may suffer in overlapped areas of the field where the seed population is too high. Planter section control can be difficult to adjust in order to align seed, nutrient, fertilizer, or any commodity that is applied to the ground surface with any boundaries without overlap or underlap. Overlap occurs when the seed or commodity is positioned in a location that is passed its intended boundary or target location in the direction of travel of the planter. Underlap occurs when the seed or commodity is positioned in a location that is short of its intended boundary or target location in the direction of travel of the planter. Planter section control is difficult because latencies and tolerance stack-ups in time occur when a large system such as a planter crosses a boundary or target location at a fairly high rate of speed. Latencies occur as the GPS system is mounted on the tractor to measure the tractor position however the row units that dispense the commodity or seed are positioned rearwardly of the tractor. Tolerance stack-ups are the combination of various part dimension tolerances of the planter.

Another reason planter section control is difficult is that a time and global position or actual location that the seed or commodity is deposited onto the ground is unknown with certainty and accuracy. It is known when the seed or commodity system is engaged to begin the distribution process. However, it can be difficult to determine with adequate certainty the precise location or time offset from when the commodity delivery system is engaged to when/where the seed or commodity comes to its final resting place on the ground and the actual location of each commodity or seed on the ground. Therefore, it can be hard to predict exactly where commodity or seeds are located with respect to any boundary.

One technique to verify and adjust the location of the dispensed seeds is to manually dig in the ground for the seeds and check the location of the seeds relative to the boundary such as with a tape measure or other devices. This measurement typically requires the operator to stop and exit the planter, then check the location of the seeds or commodity. Based on the speed of the vehicle, distance or spacing between the deposited seeds or commodity, and distance of the seeds or commodity to the boundary, the operator will adjust a time or distance offset to obtain the desired placement with respect to the boundary. This is time consuming and prone to errors.

Thus there is a need for improvement for planter section control.

### SUMMARY

According to one embodiment of the present disclosure, a method comprising: emitting a patterned light from a visualization system mounted on a planter row unit onto a trench in a ground surface, wherein the visualization system includes a structured light unit mounted on the planter row unit; depositing a commodity in the trench by the planter row unit; capturing a two-dimensional image of the projected patterned light on the trench with the visualization system that includes a camera mounted on the planter row unit, wherein the two-dimensional image includes the commodity; and determining, with a controller operably connected to the camera, an error placement of the commodity in the two-dimensional image relative to a boundary.

In one example, further comprising: determining, with the controller, a location of the commodity in the trench in the two-dimensional image.

In one example, further comprising: determining, with the controller, whether the commodity captured in the two-dimensional image is a boundary commodity.

In one example, further comprising: determining, with the controller, whether the error placement is acceptable or unacceptable; in response to the error placement being unacceptable, adjusting a mechanical delay offset factor of a planter section control coupled with the planter row unit.

In one example, wherein the planter row unit is coupled to an agricultural work machine, the planter section control includes a commodity delivery system coupled to the controller and the agricultural work machine.

In one example, wherein the adjusting the mechanical delay offset factor of the planter section control is performed automatically by the controller.

In one example, wherein the adjusting the mechanical delay offset factor of the planter section control is performed by an operator.

In one example, wherein the error placement is an underlap condition of the commodity relative to the boundary.

In one example, wherein the error placement is an overlap condition of the commodity relative to the boundary.

According to one embodiment of the present disclosure, a method comprising: emitting a patterned light from a visualization system mounted on a planter row unit onto a ground surface, wherein the visualization system includes a structured light unit mounted on the planter row unit; depositing a commodity in the ground surface by the planter row unit; capturing a two-dimensional image of the projected patterned light on the trench with the visualization system that includes an imaging unit mounted on the planter row unit, wherein the two-dimensional image includes the commodity; and determining, with a controller operably connected to the camera, whether the commodity captured in the two-dimensional image is a boundary commodity relative to a boundary.

In one example, further comprising: in response to the commodity being the boundary commodity, determining with the controller, an error placement of the boundary commodity in the two-dimensional image relative to the boundary.

In one example, further comprising: determining, with the controller, whether the error placement is acceptable or unacceptable; in response to the error placement being unacceptable, adjusting a mechanical delay offset factor of a planter section control coupled with the planter row unit.

In one example, wherein the planter row unit is coupled to an agricultural work machine, the planter section control includes commodity delivery system coupled to the controller and the agricultural work machine.

In one example, further comprising: determining a desired error of placement that includes a desired distance for depositing the boundary commodity relative to the boundary; determining whether the error placement of the boundary commodity in the two-dimensional image relative to the boundary is greater than the desired error of placement; in response to the error placement being greater than the desired error of placement, adjusting a mechanical delay offset factor of a planter section control coupled with the planter row unit.

In one example, wherein in response to the error placement being less than the desired error of placement, alerting an operator of this condition.

In one example, wherein the error placement is an underlap condition of the boundary commodity relative to the boundary.

In one example, wherein the error placement is an overlap condition of the boundary commodity relative to the boundary.

In one example, further comprising: in response to the commodity being the boundary commodity, determining with the controller, a geographical identification metadata of each of the boundary commodity in the trench in the two-dimensional image and the boundary.

In one example, wherein the planter section control is operably coupled to one or more of a hopper, a seed meter, and a seed delivery system, or other systems coupled with the planter row unit that are included in the mechanical delay offset factor.

In one example, wherein the adjusting the mechanical delay offset factor of the planter section control is performed automatically by the controller.

In one example, wherein the adjusting the mechanical delay offset factor of the planter section control is performed by an operator

### BRIEF DESCRIPTION OF THE DRAWINGS

The above-mentioned aspects of the present disclosure and the manner of obtaining them will become more apparent and the disclosure itself will be better understood by reference to the following description of the embodiments of the disclosure, taken in conjunction with the accompanying drawings, wherein:
FIG. 1 is a side view of a visualization system mounted on a planter row unit;
FIG. 2 is a side view of the visualization system mounted on the planter row unit of FIG. 1;
FIG. 3 is a side view of the visualization system mounted on the planter row unit of FIG. 1 wherein the planter row unit is coupled to a tractor;
FIG. 4 is a cross-sectional view of a trench profile as determined by the visualization system of FIG. 1;
FIG. 5 is an illustrative embodiment of a seed map as determined by the visualization system mounted on the planter row unit of FIG. 1;
FIG. 6 is a first embodiment of a camera field of view of a furrow by the visualization system of FIG. 1 with a boundary;
FIG. 7 is a second embodiment of a camera field of view of a furrow by the visualization system of FIG. 1 with a boundary;
FIG. 8 is an image that is projected by a structured light unit of the visualization system of FIG. 1; and
FIG. 9 is a procedure to determine an acceptable error placement of a commodity from the image of the FIG. 8 embodiment.

Corresponding reference numerals are used to indicate corresponding parts throughout the several views.

### DETAILED DESCRIPTION

The embodiments of the present disclosure described below are not intended to be exhaustive or to limit the disclosure to the precise forms in the following detailed description. Rather, the embodiments are chosen and described so that others skilled in the art may appreciate and understand the principles and practices of the present disclosure.

Some of the benefits of the present disclosure include using an optical sensing device such as a visualization system in combination with a precise global timestamp or GPS geospatial tag, to determine a precise place or location and/or time that commodities are placed with respect to a boundary and thereby adjust planter section control by an operator or automatically. The planter section control includes a mechanical shut-off device coupled to a controller and a GPS receiver device on the agricultural work machine. The shut-off device can be a single row clutch mounted on every row unit, an electronic shut-off device that controls a section or multiple rows of the planter row units, or a turn-on device to start the commodity flow or placement. In one embodiment, wherein the shut-off device is the single row clutch then the clutch is disengaged to start the flow of the commodity.

The visualization system can sense the boundary or the boundary may be determined by an operator or automatically. The image processing performed by the visualization system determines precisely where the first or last seed or commodity was planted in relationship to the boundary. The timing of subsequent starting and stopping of the section control, or mechanical shut-off and turn-on, is adjusted based on an error placement between an actual commodity relationship to the boundary and a desired commodity relationship to boundary. In some embodiments, the actual commodity relationship is the same as the desired commodity relationship. The boundary can be set by the operator or determined by the visualization system. The boundary can include waterways, previously planted areas of a field, headland areas, or other areas. The boundary forms a geofence and is known by the global timestamp or GPS geospatial tag.

The visualization system and in some embodiments a controller coupled to the visualization system determines an error placement based on a boundary commodity that is closest to or intended to be deposited on the boundary wherein the boundary is the desired location of the boundary commodity. The visualization system determines from images that include the boundary commodity and the GPS location of the boundary relative to the boundary commodity a time and/or place or location that the boundary commodity should be deposited relative to the boundary. The visualization system and in some embodiments a controller coupled to the visualization system determines any adjustments needed for the planter section control to optimize placement or deposition of future or additional boundary commodities relative to the boundary to position the boundary commodities close to the boundary or desired location. The visualization system and in some embodiments a controller coupled to the visualization system optimizes the error placement to minimize the distance between the boundary commodity and the boundary.

The present disclosure adjusts the planter section control, via automatically or by an operator, to turn one or more implement sections on and off to position the boundary commodity placement close to the boundary. The adjustment or mechanical delay offset factor time to turn the implement sections on or off can be small increments such as seconds, milli-seconds, or any increment that is deemed effective to optimize the boundary commodity placement relative to the boundary. As the planter or agricultural work machine travels over a field, the locations of the boundary and the boundary commodity can change so adjustment or mechanical system delay time of the one or more implement sections can change. In some embodiments, the velocity of planter or agricultural work machine does not change. Adjustment of the mechanical system delay for the implement sections to shut off or turn on is based on comparison placement of the boundary commodity in the image to the known position or location of the boundary. For example, the present disclosure determines if the mechanical system delay time is starting one second too late, then the controller or operator can adjust the mechanical system delay time to start one second earlier to compensate.

Mechanical delay is an error inherent to the system. For example, since the motors for the implement sections cannot ramp up instantly to full capacity, the seed or commodity meter and the belt have to overcome inertia and start spinning up, and the seed needs time to fall to the ground that causes some offset from the perfect placement due to the mechanical delay. The mechanical delay is measured and the present application compensates for it via the mechanical delay offset factor that adjusts the timing to compensate for the mechanical delay. The mechanical delay is always present to some degree however the present application accounts for the mechanical delay via the visualization system and the adjustment of the mechanical delay offset. For example, the visualization system determines that a seed placement is off a certain distance such as 3" due to the mechanical delay so the system is turned on 0.5 seconds earlier to account for that known delay.

In one exemplary embodiment, a planter row unit coupled to the planter or agricultural work machine travels over a field and deposits a boundary commodity near the boundary. The visualization system takes an image of the boundary commodity and determines an error of placement of the boundary commodity relative to the GPS location of the boundary. The visualization system and/or a controller can also determine a GPS location of the boundary commodity for the error of placement. Or the visualization system and/or a controller can determine a location of the boundary in the image that includes the boundary commodity. Based on the error of placement, an operator or the controller will make an adjustment to mechanical system delay time. The planter row unit will then place a new boundary commodity and check a placement or location of the new boundary commodity in an image relative to the new boundary to determine a subsequent error placement. If the subsequent error placement is not acceptable, then the controller or operator will make another adjustment to mechanical system delay time until the measurement/placement of the new boundary commodity in the image relative to the boundary is within a "tolerance". The tolerance can be set by operator or automatically.

In another exemplary embodiment, an operator or the controller determines one or more or all of geolocations or geospatial tags of desired commodity placement prior to actual placement of the commodity. Next, the operator or controller determines a geolocation or geospatial tag of the boundary. As the planter row unit deposits the commodity in the field, the visualization system georeferences the actual commodity in the images captured by the visualization system. The visualization system and/or controller compares the georeferenced location of the actual commodity in the image and the prescribed geolocation of commodity placement. In particular, the visualization system and/or controller determines an error of placement for the boundary commodity relative to the boundary. Based on the error of placement, the planter section control is adjusted to turn implement sections on and off.

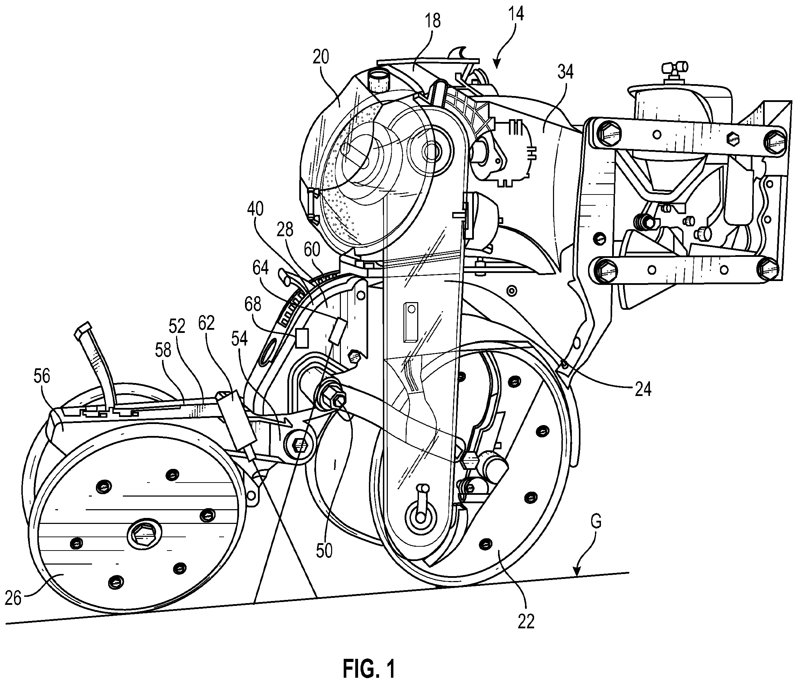

Referring now to Figs. 1, 2, and 3, an embodiment of a planter row unit 14 is coupled to an agricultural work machine 140 such as a tractor. The planter row unit 14 is an illustrative embodiment wherein other embodiments of planter row units can be used with the present disclosure. In Fig. 1, only a single planter row unit 14 is shown, but a plurality of planter row units 14 may be coupled to a frame of the agricultural work machine 140 in any known manner. The planter row unit 14 may be coupled to the frame by a linkage (not illustrated) so that the planter row unit 14 can move up and down to a limited degree relative to the frame.

Each planter row unit 14 may include an auxiliary or secondary hopper 18 for holding product such as fertilizer, seed, chemical, or any other known product or commodity. In this embodiment, the secondary hopper 18 may hold seed. As such, a seed meter 20 is shown for metering seed received from the secondary seed hopper 18. A furrow opener or furrow opening disk 22 may be provided on the planter row unit 14 for forming a furrow or trench in a field for receiving metered seed (or other product) from the seed meter 20. The seed or other product may be transferred to the trench from the seed meter 20 by a seed delivery system 24. In one embodiment, a closing system or closing wheel 26 may be coupled to each planter row unit 14 and is used to close the furrow or trench with the seed or other product contained therein. The closing system includes a closing wheel but in other embodiments the closing system can include closing disks, closing tires, and/or drag chains to name a few examples.

In one embodiment, the seed meter 20 is a vacuum seed meter, although in alternative embodiments other types of seed meters using mechanical assemblies or positive air pressure may also be used for metering seed or other product. As described above, the present disclosure is not solely limited to dispensing seed. Rather, the principles and teachings of the present disclosure may also be used to apply non-seed products to the field. For seed and non-seed products, the planter row unit 14 may be considered an application unit with a secondary hopper 18 for holding product, a product meter for metering product received from the secondary hopper 18 and an applicator for applying the metered product to a field. For example, a dry chemical fertilizer or pesticide may be directed to the secondary hopper 18 and metered by the product meter 20 and applied to the field by the applicator.

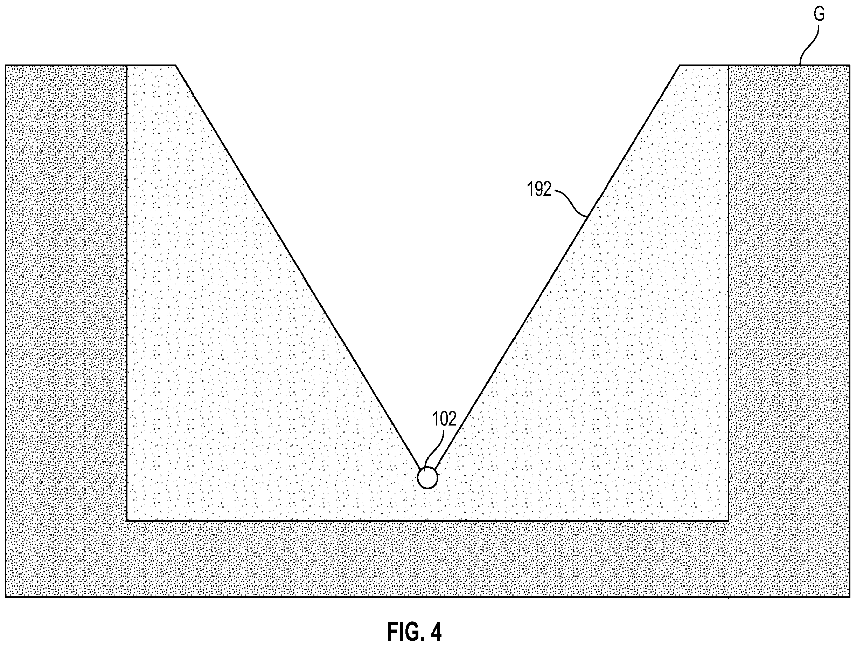

The planter row unit 14 includes a shank 40. The shank 40 is coupled to a closing wheel frame 52. The closing wheel frame 52 has a pivot end 54 that is pivotably connected to a pivot 49 and an opposite end 56 with a body portion 58 that spans between the pivot end 54 and the opposite end 56. The planter row unit 14 includes a pair of furrow opening disks 22 rotatably mounted on the shank 40 and a pair of closing wheels 26 rotatably mounted on the closing wheel frame 52. The planter row unit 14 can also include a pair of gauge wheels but those are not illustrated. The pair of furrow opening disks 22 form a trench or furrow 192 in the field or in a ground surface G during operation of the planter row unit 14. Alternatively, other opening devices can be used in place of the pair of furrow opening disks 22. The trench 192 has a cross-sectional shape as a V shape as illustrated in Fig. 4. In yet another embodiment, the trench 192 can have other cross-sectional shapes. The pair of closing wheels 26 close or cover the trench or furrow 192 with displaced soil that occurs from the pair of furrow opening disks 22 opening or forming the trench 192 in the ground surface G. Alternatively, other closing devices can be used in place of the pair of closing wheels 26.

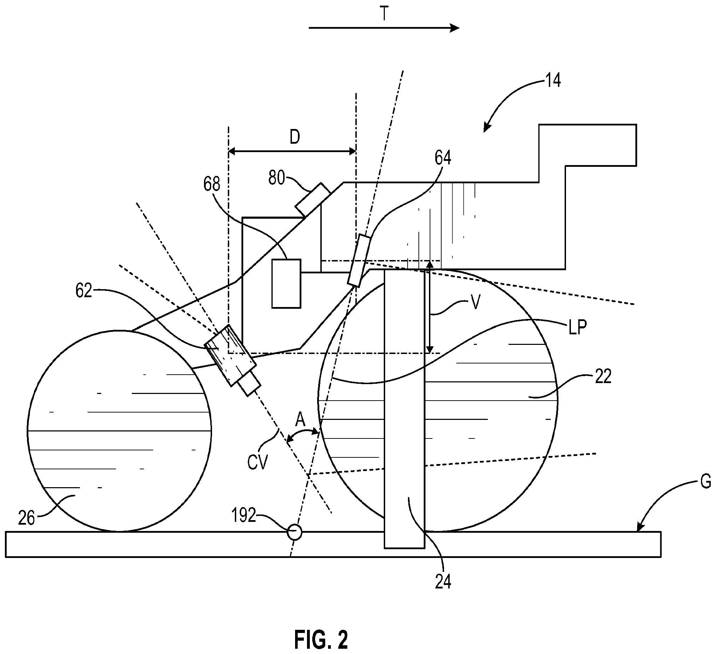

An exemplary configuration of a visualization system 60 is operably connected and mounted to the planter row unit 14 is illustrated in Figs. 1 and 2 and described next. The visualization system 60 includes a camera or imaging unit 62 and a structured light unit 64 wherein the camera or imaging unit 62 is laterally or horizontally offset a distance D from the structured light unit 64. In the illustrated embodiment, the camera or imaging unit 62 is vertically offset a distance V from the structured light unit 64. In one embodiment, the horizontal and vertical distances D and V are very small such that the camera or imaging unit 62 and the structured light unit 64 are very close to one another and can be assembled in a visualization kit that includes a package or container that holds the camera or imaging unit 62 and the structured light unit 64 that is mounted on the planter row unit 14. In other embodiments, the camera or imaging unit 62 is not vertically offset from the structured light unit 64 such that V is zero distance. In the illustrated embodiment in Fig. 2, the camera or imaging unit 62 has a principle optical axis CV that intersects with a light plane LP from the structured light unit 64 to form an angle A there between. The angle A can be less than 90 degrees, 90 degrees, or an obtuse angle. In other embodiments, the camera or imaging unit 62 is oriented such that the principle optical axis CV is close to the trench 192 or may be oriented towards the closing wheels 26. In any embodiment, the principle optical axis CV of the camera or imaging unit 62 may or may not intersect the light plane LP from the structured light unit 64. The principle optical axis CV is along a centerline of a field of view of the camera or imaging unit 62. In any of these embodiments, the field of view of the camera or imaging unit 62 is arranged to capture images of the patterned light from the structured light unit 64 that intersects with the trench 192 at the ground surface G.

Although one camera or imaging unit 62 is illustrated, additional cameras 62 can be used with the structured light unit 64. The camera or imaging unit 62 is mounted between the pair of closing wheels 26 and the pair of furrow opening disks 22 or alternatively the camera or imaging unit 62 is mounted between the pair of closing wheels 26 and the seed delivery system 24. The structured light unit 64 is also mounted between the pair of closing wheels 26 and the pair of furrow opening disks 22 or alternatively the structured light unit 64 is mounted between the pair of closing wheels 26 and the seed delivery system 24. In the illustrated embodiment, the camera or imaging unit 62 is positioned close to the pair of closing wheels 26 and the structured light unit 64 is positioned close to the seed delivery system 24 and/or the pair of furrow opening disks 22. In other embodiments, the structured light unit 64 is positioned close to the pair of closing wheels 26 and the camera or imaging unit 62 is positioned close to the seed delivery system 24 and the pair of furrow opening disks 22.

In some embodiments, the visualization system 60 includes a general illumination light 68 mounted to the planter row unit 14. The general illumination light 68 can include one or more light emitting diodes (LED) or broad-beamed, high intensity artificial light. The general illumination light 68 can illuminate the trench 192 to help capture the visual context of the trench 192 by the camera or imaging unit 62. The general illumination light 68 can be used with the structured light unit 64. Imaging by the camera or imaging unit 62 can be performed with alternating light sources such that the structured light unit 64 is operable while the general illumination light 68 is non-operable, and vice versa wherein the structured light unit 64 is non-operable while the general illumination light 68 is operable. Non-operation of the general illumination light 68 during operation of the structured light unit 64 enables the camera or imaging unit 62 to capture a 2D image where the pattern created by the structured light unit 64 stands out significantly from the rest of the background. Non-operation of the structured light unit 64 during operation of the general illumination light 68 enables the camera or imaging unit 62 to capture a better image of the visual context of the trench 192 by the camera or imaging unit 62. Alternatively, the general illumination light 68 and the structured light unit 64 can be operational together. For example, the structured light unit 64 is activated while the camera or imaging unit 62 captures images however the general illumination light 68 is not operational for every image that is captured by the camera or imaging unit 62. As a further example, the general illumination light 68 can be operational for some of the images that are captured and non-operational for other of the images that are captured by the camera or imaging unit 62. The general illumination light 68 is placed between the pair of closing wheels 26 and the pair of furrow opening disks 22. The general illumination light 68 can alternatively be mounted or combined with the camera or imaging unit 62. The general illumination light 68 can be placed under the shank 40 or under the closing wheel frame 52. The general illumination light 68 can be placed anywhere on the planter row unit 14 to illuminate a field of view of the camera or imaging unit 62.

In any embodiment, the camera or imaging unit 62 is oriented to point down towards the ground surface G at the trench 192 that is formed by the pair of furrow opening disks 22. The camera or imaging unit 62 also points down toward the projected light from the structured light unit 64 at the trench 192 in the ground surface G. The structured light unit 64 projects a narrow band of light across the trench 192 to produce a line of illumination or patterned light and can be used for location of a seed or commodity 102 therein and location of a boundary 200. The structured light unit 64 points towards the ground surface G and the trench 192 formed therein. In any embodiment, the structured light unit 64 and the camera or imaging unit 62 are accurately calibrated relative to each other so that 3D locations of the commodity 102, the trench 192, and the boundary 200 can be recovered by triangulation or other techniques.

The structured light unit 64 includes a single laser or single light source that projects a single line, multiple lines, grids, stripes, one or more dots or point projections, cross, triangle, or other known pattern of light, collectively "patterned light" on the trench in the ground surface G. Alternatively, the structured light unit 64 can include multiple lasers or light sources. For example, the structured light unit 64 can emit a single point projection to a trench bottom for determining a trench depth or commodity location. As another example, the structured light unit 64 can emit a single line projection for measuring cross-section of the trench as well as the trench depth or the commodity location. As yet another example, the structured light unit 64 can emit an area projection such as multiple lines, grids, or stripes for measuring a location of the commodity 102, the trench 192, and the boundary 200 at various points within the measured section. In one embodiment, a slit in a light cover can be positioned in front of the structured light unit 64 to thereby project multiple lines on the trench 192 to provide additional points, mesh, or an area of 3D points to perform a multiple cross sectional measurement. Multiple lines may be beneficial in a dusty environment to increase the potential to obtain a good measurement. The structured light unit 64 can also pass through a digital spatial light modulator to form a pattern with regular and equidistant stripes of light on the trench 192. In one embodiment, projection by the structured light unit 64 of a single line as the planter row unit 14 moves towards the direction of laser scanning T for additional scanning of cross sectional measurements and measurement of the commodity 102.

In one embodiment, the structured light unit 64 is a green light but in other embodiments the structured light unit 64 can be another colored light such as blue or a white light. If the structured light unit 64 is configured as a colored light, then the camera or imaging unit 62 is a color or monochrome camera. Alternatively, the structured light unit 64 can be a near-infrared (NIR), infrared (IR), or other non-visible range for better visibility in challenging or obstructive environmental conditions such as dust, fog, or haze wherein the NIR or IR light is used with the camera or imaging unit 62 being infrared or near-infrared. As such, the camera or imaging unit 62 and the structured light unit 64 can be operated in the visible spectrum range, or outside of the visible spectrum range such as infrared range in order to have better air obscurant penetration such as dust penetration. While the trench 192 is formed by the furrow opening disks 22, soil and dust can fill or permeate the air so it is difficult for the operator or a conventional color camera to capture the trench 192 cross-sectional shape. A near infrared camera or imaging unit 62 can be used in dusty or visibly challenging environments to improve the visualization of the 2D plane that is projected by the structured light unit 64.

In certain embodiments, the visualization system 60 includes or is operatively connected to a controller 80 structured to perform certain operations to control the camera or imaging unit 62, the structured light unit 64, and the general illumination light 68. The controller 80 can be placed anywhere on the planter row unit 14, the planter, the agricultural work machine or tractor 140, or any work machine that may be connected to or capable of performing one or more planting operations. In certain embodiments, the camera or imaging unit 62 includes the controller 80. In certain embodiments, the controller 80 forms a portion of a processing subsystem including one or more computing devices having memory, processing, and communication hardware. The controller 80 may be a single device or a distributed device, and the functions of the controller 80 may be performed by hardware or by instructions encoded on computer readable medium. The controller 80 may be included within, partially included within, or completely separated from other controllers (not shown) associated with the work machine and/or the visualization system 60. The controller 80 is in communication with any sensor or other apparatus throughout the visualization system 60, including through direct communication, communication over a datalink, and/or through communication with other controllers or portions of the processing subsystem that provide sensor and/or other information to the controller 80.

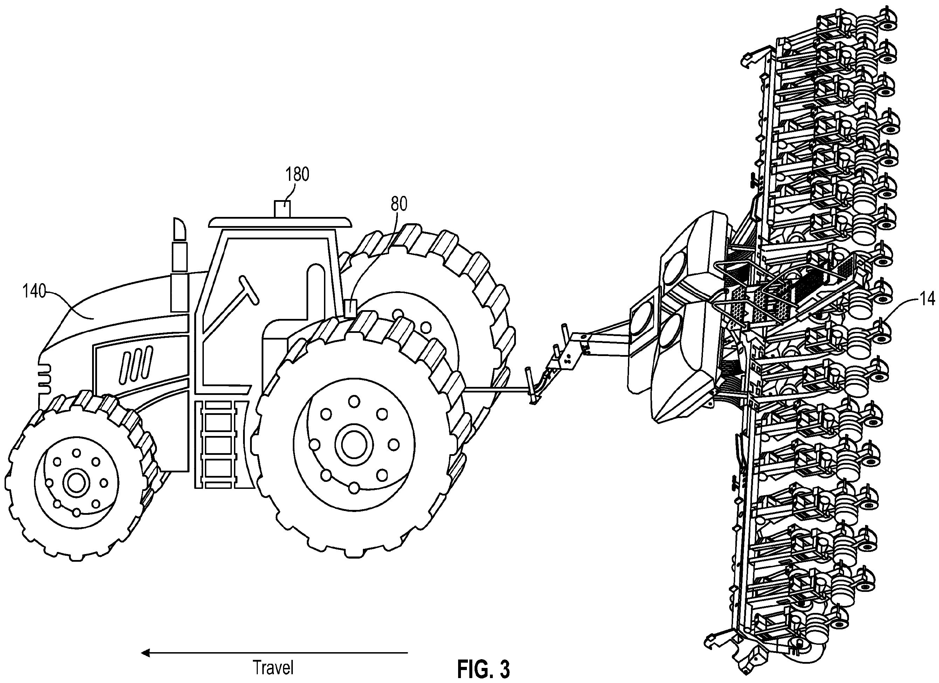

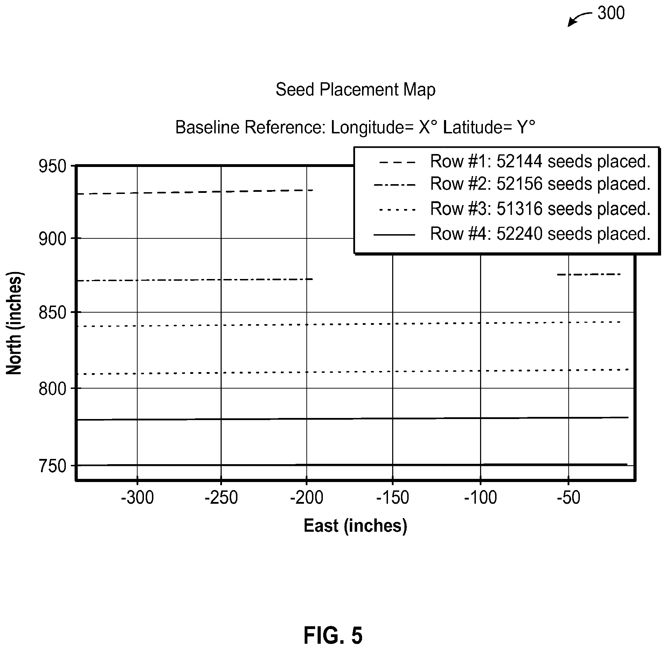

The vehicle controller 80 can include a GPS device or be operably coupled with a GPS device 180 (Fig. 3) to enable location-based field registration and mapping of commodity or seed placement, depth estimation, and location based images on a map 300 from the captured images as illustrated in Fig. 5. Alternatively, in other embodiments, the visualization system 60 includes a GPS device. A planter section control (not illustrated) includes a mechanical shut-off device coupled to the controller 80 and a GPS receiver device on the agricultural work machine 140. The GPS receiver can be the GPS device 180. The shut-off device can be a single row clutch mounted on every row unit or an electronic shut-off device that controls a section or multiple rows of the planter row units.

The location-based field registration or map 300 can also account for the velocity of the planting vehicle or the agricultural work machine 140 at the time any images were captured. The map 300 is illustrative of one exemplary map however it is contemplated that other types of maps can be configured as desired, and based on the individual field, commodity application, and GPS coordinates, to name a few characteristics of the map 300.

In some embodiments, images and determined metrics may be tagged or geotagged during registration with GPS information producing the field map 300. For example, the images with the commodity 102 and the trench 192 may be geotagged to include geographical identification metadata to various media such as a geotagged photograph or video, websites, SMS messages, QR Codes or RSS feeds and is a form of geospatial metadata. This data usually consists of latitude and longitude coordinates, though they can also include altitude, bearing, distance, accuracy data, and place names, and perhaps a time stamp. Geotagging can help users find a wide variety of location-specific information from a device. The geographical location data used in geotagging can be derived from the GPS device 180. In many embodiments, a user experience interface such as in the agricultural work machine 140 may comprise a processor enabled display system wherein the processor executes computer readable instructions to produce visualized output illustrating of a plurality of captured data including the map 300, the image 100, and the boundary 200.

Another aspect of the present application provides systems and methods for automatically adjusting planter components or mechanical delay offset factor of the planter section control in response to determined seeding or commodity measurements and/or GPS locations of the seed or commodity 102 relative to the boundary 200 based on images captured by the visualization system 60. These systems and methods determine an error placement between a boundary commodity to the boundary 200 and a desired boundary commodity to the boundary 200. These systems and methods can then adjust the mechanical delay offset factor of the mechanical systems of the mechanical systems of the planter row unit 14 accordingly until the error placement is acceptable. The adjustments to the mechanical delay offset factor of the mechanical systems of the planter row unit 14 can be made by an operator or automatically such as by the controller 80.

In certain embodiments, the controller 80 is described as functionally executing certain operations. The descriptions herein including the controller operations emphasizes the structural independence of the controller, and illustrates one grouping of operations and responsibilities of the controller. Other groupings that execute similar overall operations are understood within the scope of the present application. Aspects of the controller may be implemented in hardware and/or by a computer executing instructions stored in non-transient memory on one or more computer readable media, and the controller may be distributed across various hardware or computer based components.

Example and non-limiting controller implementation elements include sensors providing any value determined herein, sensors providing any value that is a precursor to a value determined herein, datalink and/or network hardware including communication chips, oscillating crystals, communication links, cables, twisted pair wiring, coaxial wiring, shielded wiring, transmitters, receivers, and/or transceivers, logic circuits, hard-wired logic circuits, reconfigurable logic circuits in a particular non-transient state configured according to the module specification, any actuator including at least an electrical, hydraulic, or pneumatic actuator, a solenoid, an op-amp, analog control elements (springs, filters, integrators, adders, dividers, gain elements), and/or digital control elements.

The listing herein of specific implementation elements is not limiting, and any implementation element for any controller described herein that would be understood by one of skill in the art is contemplated herein. The controllers herein, once the operations are described, are capable of numerous hardware and/or computer based implementations, many of the specific implementations of which involve mechanical steps for one of skill in the art having the benefit of the disclosures herein and the understanding of the operations of the controllers provided by the present disclosure.

One of skill in the art, having the benefit of the disclosures herein, will recognize that the controllers, control systems and control methods disclosed herein are structured to perform operations that improve various technologies and provide improvements in various technological fields. Certain operations described herein include operations to interpret one or more parameters. Interpreting, as utilized herein, includes receiving values by any method known in the art, including at least receiving values from a datalink or network communication, receiving an electronic signal (e.g. a voltage, frequency, current, or PWM signal) indicative of the value, receiving a software parameter indicative of the value, reading the value from a memory location on a non-transient computer readable storage medium, receiving the value as a run-time parameter by any means known in the art, and/or by receiving a value by which the interpreted parameter can be calculated, and/or by referencing a default value that is interpreted to be the parameter value.

In some embodiments, the visualization system 60 is operably connected to a mobile device (not illustrated) such as a mobile phone, computer, laptop, or electronic tablet that includes a user interface for operably engaging with the visualization system 60 and the operator; however, in other embodiments the visualization system 60 is not connected to the mobile device. The user interface of the mobile device can display the same display as a user interface in the agricultural work machine 140 or a different display.

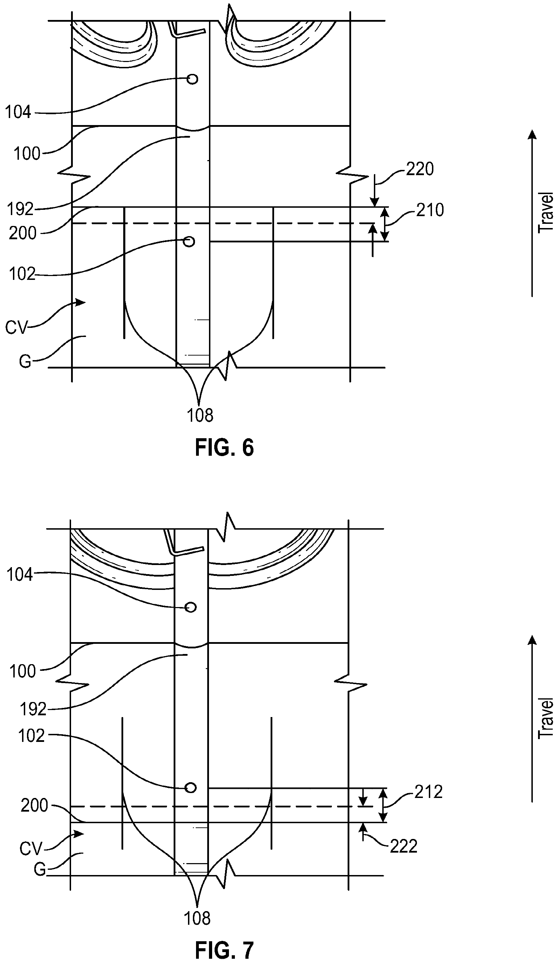

Figs. 6 and 7 illustrate the camera field of view CV that includes the trench or furrow 192 in the field or in the ground surface G, the seed or commodity 102 and a subsequent seed or commodity 104 placed in the trench 192, and the direction of travel T of the agricultural work machine 140. In Figs. 6 and 7, the seed or commodity 102 is considered a boundary commodity in that the ideal or intended location for this specific commodity is on the boundary 200. The structured light unit 64 projects a single line laser or a two-dimensional (2D) laser or light plane LP of light toward the ground surface G, and an image 100 illustrated as a line. The image 100 is a single line in Figs. 6 and 7, but more complicated patterns such as multiple lines, grids, or dots could be used in order to have more 3D points. In the illustrated embodiment, the visualization system 60 includes another light source that projects a pair of guideline lights 108 that are positioned exterior to the trench or furrow 192. The pair of guideline lights 108 assist the operator driving the agricultural work machine 140 and/or the visualization system 60 to maintain the camera field of view CV positioned or oriented along the trench or furrow 192. The pair of guideline lights 108 may not be present in other embodiments. In some embodiments, a marker such as a ruler or a coin can be displayed in the image 100 for a reference scale or to represent relative location of the center of the camera field of view CV.

Figs. 6 and 7 also illustrate the boundary 200 as determined by any of the visualization system 60, the controller 80, user input, global timestamping, GPS geospatial tag, or other techniques, wherein the boundary 200 is representative of the location in the ground surface G in which the commodity 102 is intended to be deposited. In Fig. 6, an error of placement 210 is the distance from the boundary 200 to the commodity 102, i.e., the boundary commodity. The error of placement 210 illustrates an underlap in Fig. 6. In Fig. 7, an error of placement 212 is the distance from the boundary 200 to the commodity 102, i.e., the boundary commodity. The error of placement 212 illustrates an overlap. The errors of placement 210 and 212 are actual distance differences between the commodity 102 and the boundary 200.

In some embodiments, a desired error of placement 220 and 222 is determined as illustrated in Figs. 6 and 7. The desired error of placement 220 and 222 is a desired distance for deposition of the commodity 102 to the boundary 200. The desired errors of placement 220 and 222 are preferable distances in which the commodity 102 is deposited to the boundary 200. In some embodiments, the desired errors of placement 220 and 222 is set by an operator. In some embodiments, the desired errors of placement 220 and 222, respectively, are the same as the errors of placement 210 and 212, respectively.

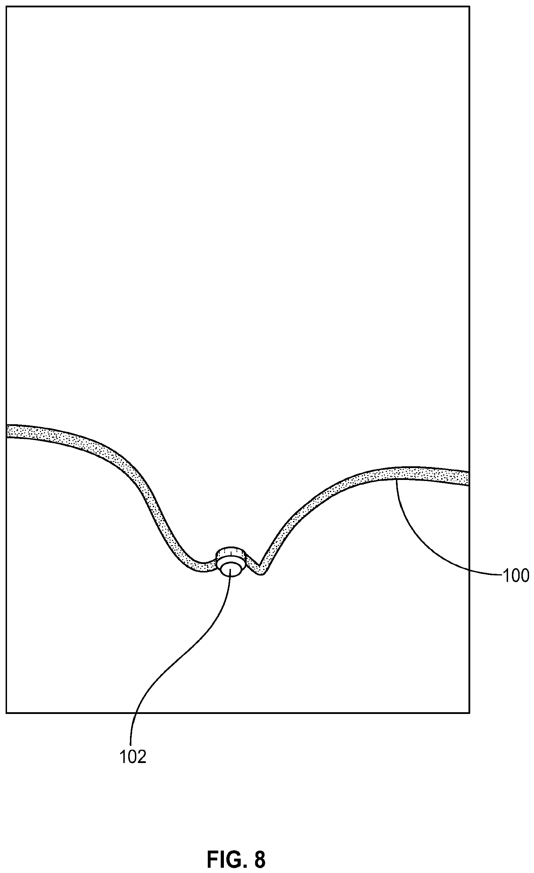

Measurement of the location of the commodity 102 will now be described by measuring the three-dimensional (3D) location of the laser points or patterned light of an image 100 that is projected by the structured light unit 64 as illustrated in Fig. 8. In one form, the measurement of the location of the commodity 102 is determined by using structured-light based sensing. In the embodiment wherein the structured light unit 64 projects a single line laser, the structured light unit 64 emits patterned light (see Fig. 2) toward the ground surface G, and the image 100 illustrated as a line (see Fig. 8) is the intersection of the laser plane LP and the location of the commodity 102 in the ground surface G. The image 100 is a single line in Fig. 8, but more complicated patterns such as multiple lines, grids, or dots, or any type of patterned light previously discussed could be used in order to have more or less 3D points. The camera or imaging unit 62 captures the image 100 of the trench 192 with the commodity 102 therein with the projected patterned light. The geometric relationship between the laser or light plane LP projected by the structured light unit 64 and the principle optical axis CV of the camera or imaging unit 62 is determined by the location and orientation of the camera or imaging unit 62 and the structured light unit 64 relative to each other, therefore the 3D location of the laser line pixels in the image 100 is determined. After the 3D location of the laser line pixels are determined, a 3D location of the trench 192 is determined. The 3D location of the trench 192 or trench parameters can include depth, width, and other geometric features, and geographical identification metadata of the trench 192 as well as the time of the captured image 100 are computed based on 3D measurement in the image 100. Additional images 100 may be captured until the image 100 includes the trench 192 with the commodity 102 therein. The 3D location of the trench 192 and the commodity 102 or commodity parameters can include depth of the commodity 102, distance from the commodity 102 to the boundary 200, and geographical identification metadata of the commodity 102 as well as the time of the captured image 100 with the commodity 102 are computed based on 3D measurement in the image 100.

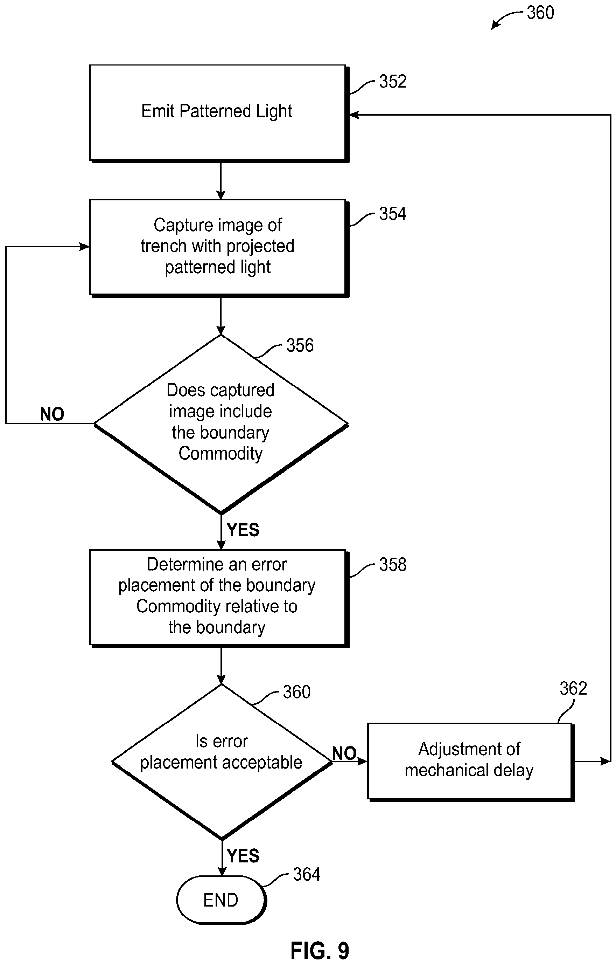

Certain systems are described and include examples of controller operations in various contexts of the present disclosure. In certain embodiments, such as procedure 350 shown in Fig. 9, the structured light unit 64 emits the patterned light toward the ground surface G at an operation 352 that includes the image 100 illustrated as a line is the intersection of the emitted patterned light or laser plane LP and the trench in the ground surface G. The camera or imaging unit 62 captures the emitted patterned light or the light plane LP from the structured light unit 64 such that the camera or imaging unit 62 captures the image 100 of the trench with the projected patterned light at an operation 354. As discussed previously, the emitted patterned light includes a single line, multiple lines, grids, stripes, one or more dots or point projections, cross, triangle, or other known pattern of light, which corresponds to the projected patterned light that is captured in the image 100 at operation 354. The controller 80 is operable to determine the location of the projected light in the image 100 (3D or three-dimensional space). At operation 356, the controller 80 is operable to determine whether the image 100 includes the boundary commodity 102. If the image 100 does not include the boundary commodity 102, then the camera or imaging unit 62 continues to capture the image 100 of the trench with the projected patterned light at the operation 354. Returning to step 356, if the image 100 includes the boundary commodity 102, then the procedure continues to step 358 wherein the controller 80 determines the error placement 210 or 212 of the boundary commodity 102 relative to the boundary 200 in the image 100. In step 358, the controller 80 can also detect the geolocation of the boundary commodity 102 from an image and extend pixel mapping to geograph location of the boundary commodity 102. In step 358, measurements and/or GPS locations of the boundary commodity 102 relative to the boundary 200 based on images captured by the visualization system 60 determine the error placement 210 or 212.

In step 360, the controller 80 determines if the error placement 210 or 212 is acceptable. If the error placement 210 or 212 is not acceptable, then at step 362 adjustment of a mechanical delay offset factor of the planter row unit 14 is determined. In step 362, adjustment of the mechanical delay offset factor of the planter components or mechanical delay offset factor of the planter section control in response to determined error placement 210 or 212 is not acceptable is made. The adjustments to the mechanical delay offset factor of the mechanical systems, the planter section control, and/or commodity delivery systems of the planter row unit 14 can be made by an operator or automatically such as by the controller 80.

Step 362 then continues to step 352 to repeat the procedure 350 and continue checking for the boundary commodity 102 in relation to the boundary 200 and an acceptable error placement 210 or 212. The procedure 350 is applicable to commodity that can include seed, sprays, residue, fertilizer, growing plants, and/or emergence detection of a plant.

In step 360, if the error placement 210 or 212 is acceptable, then at step 364 the procedure 350 ends.

## Claims

1. A method of operating an agricultural work machine (140) comprising:
emitting (352) a patterned light from a visualization system (60) mounted on a planter row unit (14) onto a trench in a ground surface (G), wherein the visualization system (60) includes a structured light unit (64) mounted on the planter row unit (14);
depositing a commodity in the trench by the planter row unit (14);
capturing (354) a two-dimensional image of the projected patterned light on the trench with the visualization system (60) that includes a camera (62) mounted on the planter row unit (14), wherein the two-dimensional image includes the commodity (102); and
determining (358), with a controller (80) operably connected to the camera (62), an error placement (210, 212) of the commodity (102) in the two-dimensional image relative to a boundary (200).

2. The method of claim 1, further comprising:
determining, with the controller (80), a location of the commodity (102) in the trench in the two-dimensional image; or
determining, with the controller (80), whether the commodity (102) captured in the two-dimensional image is a boundary commodity (102).

3. The method of claim 1 or 2, further comprising:
determining, with the controller (80), whether the error placement (210, 212) is acceptable or unacceptable (360);
in response to the error placement (210, 212) being unacceptable, adjusting a mechanical delay offset factor of a planter section control (362) coupled with the planter row unit (14).

4. The method of claim 3, wherein the adjusting the mechanical delay offset factor of the planter section control (362) is performed automatically by the controller (80).

5. The method of one of the claims 1 to 4, wherein the error placement (210) is an underlap condition of the commodity (102) relative to the boundary (200); or
wherein the error placement (212) is an overlap condition of the commodity (102) relative to the boundary (200).

6. The method of one of the claims 1 to 5, wherein the planter row unit (14) is coupled to an agricultural work machine (140), the planter section control includes a commodity delivery system coupled to the controller (80) and the agricultural work machine (140).

7. The method of one of the claims 1 to 6, further comprising:
determining a desired error of placement (220, 222) that includes a desired distance for depositing the boundary commodity (102) relative to the boundary (200);
determining whether the error placement (210, 212) of the boundary commodity (102) in the two-dimensional image relative to the boundary (200) is greater than the desired error of placement (220, 222);
in response to the error placement (210, 212) being greater than the desired error of placement (220, 222), adjusting a mechanical delay offset factor of a planter section control coupled with the planter row unit (14); and
wherein in response to the error placement (210, 212) being less than the desired error of placement (220, 222), alerting an operator of this condition.

8. The method of one of the claims 1 to 7, further comprising:
in response to the commodity (102) being the boundary commodity (102), determining with the controller (80), a geographical identification metadata of each of the boundary commodity (102) in the trench in the two-dimensional image and the boundary (200).

9. The method of one of the claims 1 to 8, wherein a planter section control is operably coupled to one or more of a hopper, a seed meter, and a seed delivery system, or other systems coupled with the planter row unit (14) that are included in the mechanical delay offset factor.

10. The method of one of the claims 1 to 9 further comprising:
depositing a product in the trench by the planter row unit (14);
capturing a two-dimensional image of the projected patterned light on the trench with the visualization system (60), wherein the two-dimensional image includes the product;
determining, with a controller (80) operably connected to the camera (62), a location of the commodity (102) in the two-dimensional image; and
determining, with the controller (80), a product characterization of the product in the two-dimensional image.

11. The method of claim 10, wherein the commodity (102) and the product are captured in the same two-dimensional image.

12. The method of claim 10 or 11, wherein the commodity (102) is captured in one of the two-dimensional image and the product is captured in a second of the two-dimensional image.

13. The method of one of the claims 10 to 12, further comprising:
determining, with the controller (80), an error characterization of the product characterization relative to the location of the commodity (102) in the two-dimensional image;
determining, with the controller (80), whether the error characterization is within an acceptable range or an unacceptable range; and
wherein the product characterization includes any of a length, a width, an area, or a depth of the product as determined from the two-dimensional image.

14. The method of claim 13, further comprising:
in response to the error characterization being in the unacceptable range, adjusting a mechanical delay offset factor of any of a planter section control, a commodity delivery system, or a product delivery system coupled with the planter row unit (14) and the controller (80).

15. The method of claim 13 or 14, wherein the product characterization is a band of fertilizer having a length, wherein the commodity (102) is a seed, wherein the error characterization indicates a placement of the band of product in the two-dimensional image relative to a location of the commodity (102) in the two-dimensional image.
